# EUROPEAN PATENT SPECIFICATION

(11) **EP 2 204 551 B1**
(45) Date of publication and mention of the grant of the patent: **08.02.2012**
(21) Application number: 09180903.8
(22) Date of filing: 29.12.2009
(51) Int. Cl.: F01D 17/26, F02C 6/08, F02C 7/22, F02C 9/18

(54) **Gas turbine for electric power generation**
Gasturbine zur Erzeugung elektrischer Energie
Turbine à gaz pour la production d'énergie électrique

(30) Priority: 30.12.2008 IT MI20082339
(43) Date of publication of application: 07.07.2010
(73) Proprietor: Ansaldo Energia S.p.A., Genova (IT)
(72) Inventor: Ferrari, Fabrizio, 16013 Campo Ligure (IT); Leoncini, Ezio, 16013 Campo Ligure (IT); Minervini, Luigi, 16122 Genova (IT); Ursino, Giacomo, 16125 Genova (IT)
(74) Representative: Jorio, Paolo

(56) References cited:
- EP-A1- 0 127 027
- FR-A- 882 030
- US-A- 3 103 785
- US-A- 3 925 980
- US-A- 5 561 976
- US-B2- 6 363 707

## Description

The present invention relates to an electric power plant.

Electric power plants are known, comprising a turbogas assembly provided with a gas turbine, a compressor, a combustion chamber and a circuit for supplying fuel to the combustion chamber. The compressor comprises a plurality of adjustable inlet guide vanes, at least one actuating device for adjusting the plurality of adjustable inlet guide vanes, a plurality of compressor discharge valves, generally named blow-off valves, and a plurality of actuating devices for operating respective compressor discharge valves.

The circuit for supplying fuel to the combustion chamber comprises a plurality of valves and a plurality of actuating devices for operating respective valves.

As a whole, there is a relatively high number of actuating devices in the plant which are to be activated under different operating conditions of the plant.

Therefore, the electric power plant has a complex architecture, the construction of which is difficult and expensive in terms of tine and money. Furthermore, the coordinated activation of all the actuating devices is often subject to malfunctions. Examples of known power plants are disclosed in documents US 5,561,976 and US 3,925,980.

It is an object of the present invention to provide an electric power plant which is free from the drawbacks of the prior art.

It is a further object of the present invention to overcome the above-described drawbacks of the prior art in a simple and cost-effective manner, both from the functional and from the constructional point of view; in particular, it is an object of the invention to provide a simple, reliable plant.

In accordance with these objects, the present invention relates to an electric power plant comprising:
- a turbogas assembly provided with:
- a gas turbine;
- a compressor comprising a plurality of adjustable inlet guide vanes, at least a first hydraulic actuating device for adjusting the plurality of adjustable inlet guide vanes, a plurality of compressor discharge valves and a plurality of second hydraulic actuating devices for operating respective compressor discharge valves;
- a combustion chamber;
- a circuit for supplying fuel to the combustion chamber comprising a plurality of valves and a plurality of third hydraulic actuating devices for operating respective valves;
- a hydraulic circuit for supplying an actuating fluid to the first hydraulic actuating device, to the second hydraulic actuating devices and to the third hydraulic actuating devices; wherein the hydraulic circuit comprises a tank for collecting the actuating fluid and at least a pump for supplying the actuating fluid to the first hydraulic actuating device, to the second hydraulic actuating devices and to the third hydraulic actuating devices; the electric power plant being characterized in that the tank comprises a delivery portion connected to the delivery circuit and a return portion connected to the return circuit; the hydraulic circuit comprising a cooling circuit suitable for cooling and transferring the actuating fluid from the return portion to the delivery portion.

Further features and advantages of the present invention will be apparent from the following description of a non-limitative embodiment thereof, with reference to the figures in the accompanying drawings, in which:
- figure 1 diagrammatically shows an electric power plant according to the present invention;
- figure 2 diagrammatically shows a first detail of the plant in figure 1;
- figure 3 diagrammatically shows a second detail of the plant in figure 1.

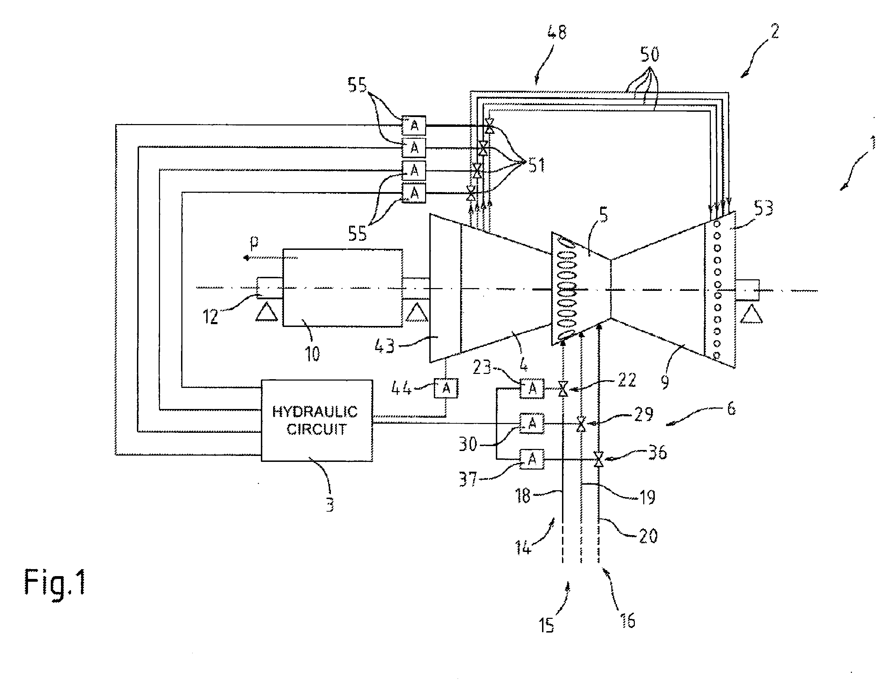

In figure 1, reference numeral 1 indicates an electric power plant comprising a turbogas assembly 2 and a hydraulic circuit.

The turbogas assembly 2 is provided with a compressor 4, a combustion chamber 5, a circuit 6 for supplying fuel to the combustion chamber 5, a gas turbine 9, which feeds a generator 10 mounted on the same shaft 12 as the gas turbine 9 and adapted to generate a power P.

Circuit 6 comprises a diesel portion 14 for supplying diesel fuel, a gas portion 15 for supplying gas and, in this example, also a water portion 16 for supplying water in order to reduce polluting emissions (NOx) of plant 1.

Figure 1 diagrammatically shows only one diesel supplying line 18 for the diesel section 14, only one gas supplying line 19 for the gas portion 15, and only one water supplying line 20 for the water portion 16. It is understood that the circuit 6 may comprise more than one diesel supplying line 18, more than one gas supplying line 19, and more than one water supplying line 20.

The diesel supplying line 18 comprises a plurality of respective diesel valves 22 (only one is shown in the drawing for simplicity), comprising both valves for adjusting the supply of diesel and non-return valves for safety reasons. Each diesel valve 22 is driven by a respective hydraulic actuating device 23.

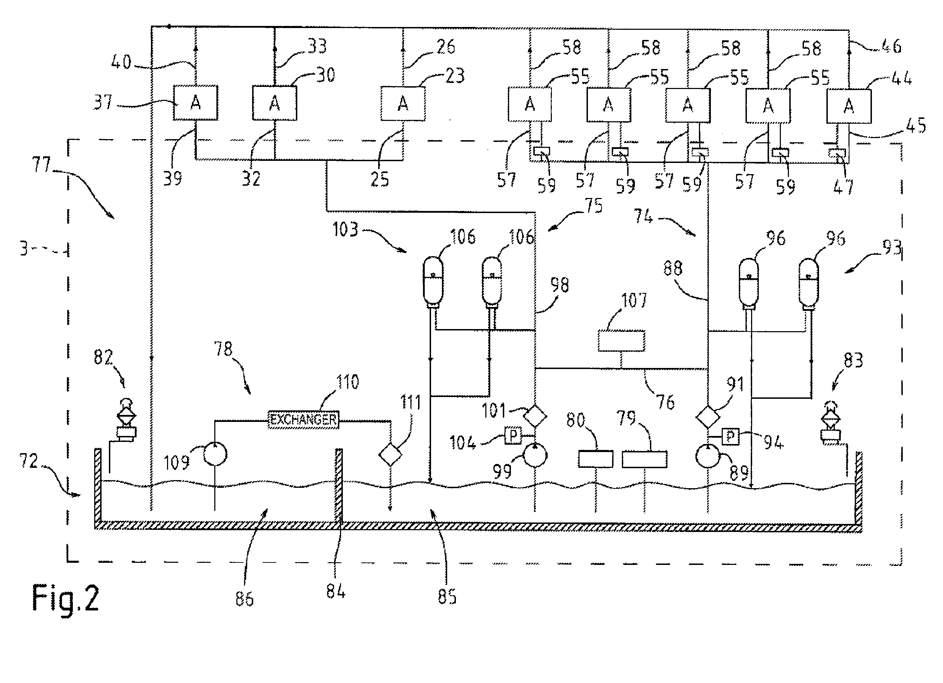

With reference to figure 2, each hydraulic actuating device 23 communicates with the hydraulic circuit 3 by means of a delivery pipe 25 and a return pipe 26, and is driven by a driving device (not shown in the accompanying figures), preferably of electromechanical type.

With reference to figure 1, the gas supplying line 19 comprises a plurality of respective gas valves 29 (only one is shown in the drawing for simplicity), for supplying and safety functions arranged along the gas supplying line 19. Each gas valve 29 is driven by a respective hydraulic actuating device 30.

With reference to figure 2, each hydraulic actuating device 30 communicates with the hydraulic circuit 3 by means of a delivery pipe 32 and a return pipe 33, and is driven by a driving device (not shown in the accompanying drawings), preferably of electromechanical type.

With reference to figure 1, the water supplying line 20 comprises a plurality of respective water valves 36 (only one of which is shown in the drawing for simplicity), for supplying and safety functions arranged along the water supplying line 20. Each water valve 36 is driven by a respective hydraulic actuating device 37.

With reference to figure 2, each hydraulic actuating device 37 communicates with the hydraulic circuit 3 by means of a delivery pipe 39 and a return pipe 40, and is driven by a driving device (not shown in the accompanying drawings), preferably of electromechanical type.

Each hydraulic actuating device 23, 30 and 37 comprises an actuator (not shown in the accompanying drawings) connected to the respective valve 22, 29 and 36. Preferably, the actuator is a double-acting cylinder with spring return.

With reference to figure 1, compressor 4 comprises an inlet section 43, which comprises one or more stages (not shown for simplicity in the accompanying drawings) provided with a plurality of adjustable inlet guide vanes (commonly IGV) (not shown for simplicity in the accompanying drawings), and at least one hydraulic actuating device 44 connected to the hydraulic circuit 3.

The hydraulic actuating device 44 is adapted to adjust the inclination of the adjustable inlet guide vanes of one or more stages of the inlet section 43 to adjust the flow of air aspirated by compressor 4.

With reference to figure 2, the hydraulic actuating device 44 communicates with the hydraulic circuit 3 by means of a delivery pipe 45 and a return pipe 46, and is driven by a driving device 47 of the hydraulic circuit 3.

With reference to figure 1, compressor 4 further comprises a compressor discharge circuit 48, which is provided with a plurality of pipes 50 and a plurality of compressor discharge valves 51, each of which is arranged along a respective pipe 50.

In the non-limiting example described and illustrated here, there are four pipes 50 and compressor discharge valves 51.

The pipes 50 put into communication a stage of compressor 4, preferably one of the first stages, e.g. the fifth, with a discharge section 53 of the gas turbine 9.

The compressor discharge circuit 48 further comprises a plurality of hydraulic actuating devices 55, each of which is connected to the hydraulic circuit 3 and is adapted to drive a respective compressor discharge valve 51. Opening one of the compressor discharge valves 51 under the control of the respective hydraulic actuating device 55 determines the discharge of a certain air flow from the compressor 4 to the discharge section 53 of the gas turbine. Opening one or more compressor discharge valves 51 is required in some operating steps of plant 1 to avoid the compressor 4 from stalling. In particular, opening the compressor discharge valves 51 is fundamental during the steps of starting up the plant 1, because during these steps the stalling of compressor 4 may cause considerable damages to plant 1.

With reference to figure 2, each hydraulic actuating device 55 communicates with the hydraulic circuit 3 by means of a delivery pipe 57 and a return pipe 58, and is driven by a driving device 59 of the hydraulic circuit 3, which will be described in detail below.

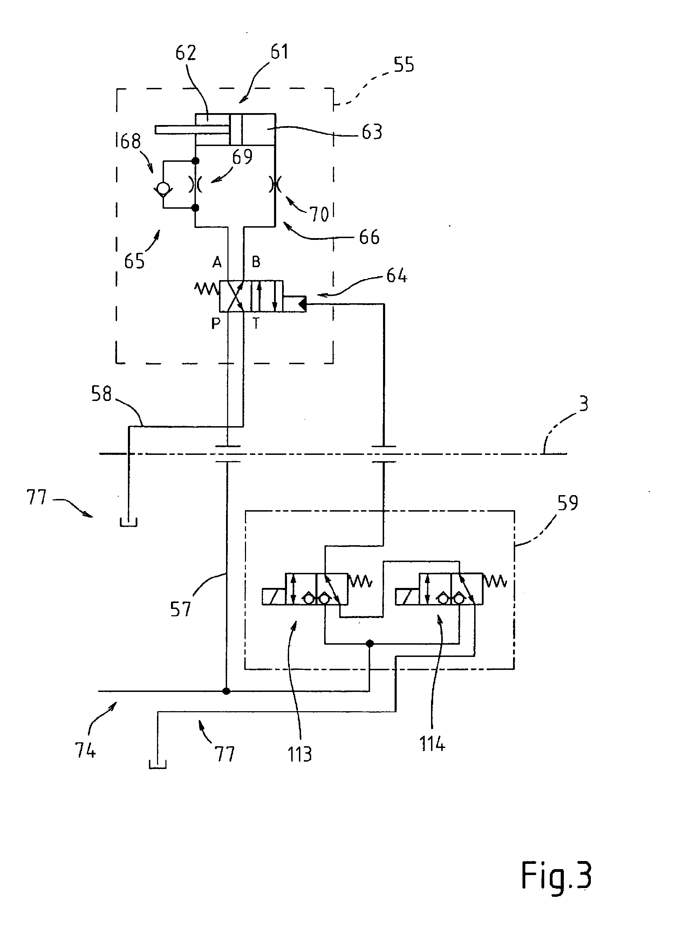

With reference to figure 3, the hydraulic actuating device 55 comprises an actuator 61 comprising a delivery chamber 62 and a return chamber 63, a delivery branch 65 connected to the delivery chamber 62, and a return branch 66 connected to the return chamber 63.

The hydraulic actuating device 55 further comprises a valve 64 hydraulically driven by the driving device 59, which puts it into communication with the delivery pipe 57 and the return pipe 58, selectively with the delivery branch 65 or with the return branch 66 according to the hydraulic command received from the driving device 59.

In particular, the valve 64 is movable between two positions: a first position in which the delivery branch 65 is connected to the delivery pipe 57 and the return branch 66 is connected to the return pipe 58, and a second position in which the return branch 66 is connected to the delivery pipe 57 and the delivery branch 65 is connected to the return pipe 58.

The delivery branch 65 is preferably provided with a check valve 68 and a bottleneck 69 in parallel, while the return branch 66 is provided with a bottleneck 70. The purpose of bottlenecks 69 and 70 is to adjust the stroke times of the actuator 61.

Actuator 61 is preferably a hydraulic, double-acting cylinder comprising a stem connected to the respective compressor discharge valve 18 (not shown in figure 3 for simplicity). In use, actuator 61 substantially takes two positions corresponding to the open position of the compressor discharge valve 18 and to the closed position of the compressor discharge valve 18, respectively.

With reference to figure 2, the hydraulic circuit 3 comprises driving devices 47 and 59, a tank 72 for an actuating fluid, a first delivery circuit 74, a second delivery circuit 75, a connecting branch 76, a return circuit 77, a cooling circuit 78, a level detecting device 79 for the actuating fluid, a temperature detecting device 80 for the actuating fluid, a hygroscopic filter 82, and an air filter 83.

Tank 72 comprises a baffle 84 which splits the tank 72 into a delivery portion 85 of the actuating fluid and a return portion 86 of the actuating fluid.

The actuating fluid is preferably a liquid having a flashpoint higher than about 300°C.

Hereinafter, the term flashpoint means the temperature at which the liquid forms vapors which are ignited in the presence of a flame.

The flashpoint is a useful parameter for establishing a suitable safety margin against the risk of fire during storage and running operations.

In particular, the flashpoint of the actuating fluid used in the hydraulic circuit 3 should be such to ensure the absence of fire risk at the operating temperatures of hydraulic actuating devices 23, 30, 37, 44, 55 of the diesel valves 22, gas valves 29, water valves 36, of the plurality of inlet guide vanes (IGV) in the inlet section 43, and compressor exhaust valves 51, respectively.

In particular, the highest working temperatures are reached in the hydraulic actuating devices 55 of the compressor exhaust valves 51, because the closeness to the compressor exhaust valves 51, through which hot compressed air from the compressor 4 flows, determines a temperature increase in the hydraulic actuating device 55.

Preferably, the actuating fluid is a non-aqueous liquid (HFD type fluids). For example, the actuating fluid may be an organic ester oil having a flashpoint of about 315°C and having a low toxicity level to ensure safety to the operators of plant 1. Some examples of oils having these features are Quintolubric 888 and Agip Arnica S.

The first delivery circuit 74 comprises a main pipe 88 adapted to connect the tank 72 with the delivery pipes 45 and 57 for supplying the hydraulic actuating devices 44 and 55, a pump 89 arranged along the main pipe 88, a filter 91 arranged downstream of the pump 89 along the main pipe 88, an accumulation circuit 93 connected to the main pipe downstream of filter 91, and a pressure detecting device 94 arranged between the pump 89 and the filter 91, respectively.

Pump 89 is adapted to aspirate a certain amount of actuating fluid from the tank 72. Preferably, pump 89 is a volumetric, axial-piston pump having a variable displacement, keyed onto an electric three-phase electric motor at fixed rpm.

Filter 91 is a filter adapted to purify the actuating fluid and having a mesh of 10 microns. Hereinafter, the term mesh indicates the mesh number by square inch of filter 91.

The accumulation circuit 93 comprises two hydraulic accumulators 96, which are adapted to accumulate and release the actuating fluid during flow transients along the main pipe 88.

The pressure detecting device 94 comprises a pressure switch and a pressure gauge (not shown for simplicity in the accompanying drawings), which are connected to a control device of the plant (not shown in the accompanying drawings) for monitoring the operation of the first delivery circuit 74.

The second delivery circuit 75 is similar in structure to the first delivery circuit 74 and comprises a main pipe 98 adapted to connect the tank 72 to the delivery pipes 25, 32 and 39 for supplying the hydraulic actuating devices 23, 30 and 37, a pump 99 arranged along the main pipe 98, a filter 101 arranged downstream of the pump 99 along the main pipe 88, an accumulation circuit 103 connected to the main pipe downstream of the filter 101, and a pressure detecting device 104 arranged between the pump 99 and the filter 101, respectively.

Pump 99 and pump 89 are preferably of the same type, as well as filter 91 and filter 101.

Like the accumulation circuit 93, the accumulation circuit 103 comprises two accumulators 106 adapted to accumulate and release the actuating fluid during flow transients along the main pipe 98.

The pressure detecting device 104 also comprises a pressure switch and a pressure gauge (not shown for simplicity in the accompanying drawings), which are connected to a control device of the plant (not shown in the accompanying drawings) for monitoring the operation of the second delivery circuit 75.

The connection branch 76 connects a point of the main pipe 89 downstream of filter 91 to a point of the main pipe 99 downstream of filter 101 and is provided with a pressure detecting and transmitting device 107, which detects the pressure and transmits it to the control system (not shown for simplicity) of plant 1.

In use, the hydraulic circuit 3 preferably has only one active pump, either pump 89 or pump 99, and by virtue of the connecting branch 76, the actuating fluid aspirated by only one pump is supplied to all hydraulic actuating devices 23, 30, 37, 44 and 55.

The return circuit 77 is connected to the return pipes 26, 33, 40, 46, 58 for receiving the actuating fluid and discharging it into the return portion 86 of the tank 72.

The cooling circuit 78 is adapted to cool a flow of actuating fluid aspirated by the return portion 86 of tank 72 and to supply it to the delivery portion 85 of tank 72. In particular, the cooling circuit 78 comprises a pump 109 which aspirates a flow of actuating fluid from the return portion 86, a heat exchanger 110 adapted to cool the flow of actuating fluid aspirated by the pump 109, and a filter 111 for purifying the cooled flow of actuating fluid.

Preferably, pump 109 is a submerged gear pump. Exchanger 110 is an exchanger of the actuating fluid/air type, while filter 111 is preferably a filter having meshes of 5 microns.

The level detecting device 79 is adapted to monitor the level of actuating fluid present in the delivery portion 85 of tank 72 and preferably comprises three level switches (not shown for simplicity in the accompanying drawings). The level detecting device 79 is preferably made so as to signal a low level and a very low level.

The temperature detecting device 80 is adapted to monitor the temperature of the actuating fluid present in the delivery portion 85 of tank 72 and comprises a thermometer (not shown for simplicity) and preferably means for transmitting the detected temperature (not shown for simplicity) to the control device of plant 1.

The hygroscopic filter 82 is positioned within the tank 72, e.g. close to an upper wall of tank 72 (not shown), and comprises a certain amount of salts adapted to absorb the humidity present inside the tank 72.

The air filter 83 is arranged inside the tank 72, e.g. close to an opening of the upper wall of tank 72 (not shown in the accompanying drawings) and comprises a grid adapted to prevent the introduction of particles into the tank 72.

With reference with figure 3, each driving device 59 of the hydraulic actuating devices 55 is connected to the first delivery circuit 74 of the hydraulic circuit 3 to be supplied with the actuating fluid and to the valve 64, and comprises two solenoid valves 113 and 114, which control the valve 64 of the hydraulic actuating device 55. The solenoid valve 113 and the solenoid valve 114 are configured so that when the solenoid valve 113 is not working, e.g. due to a failure, the solenoid valve 114 is adapted to control the valve 64 of the hydraulic actuating device 55. On the other hand, when the solenoid valve 114 is not working, the solenoid valve 113 is adapted to control the valve 64 of the hydraulic actuating device 55. Thereby, the running continuity of the driving device 59 is ensured.

The hydraulic circuit 3 advantageously uses an actuating fluid capable of withstanding the operating temperatures of the hydraulic actuating devices 23, 30, 37, 44 and 55 without the risk of the fluid catching fire. This allows to use a single hydraulic circuit for supplying all the hydraulic actuating devices 23, 30, 37, 44 and 55, including the hydraulic actuating devices 55 of the compressor discharge valves 51, which are subjected to high working temperatures. The use of a single hydraulic circuit 3 considerably simplifies the architecture of plant 1 and facilitates the control operations of the hydraulic actuating devices 23, 30, 37, 44 and 55.

Therefore, by virtue of the present invention, plant 1 is simpler, more reliable and safer.

It is finally apparent that changes and variations may be made to the plant described herein without departing from the scope of the appended claims.

## Claims

1. Electric power plant (1) comprising
- a turbogas assembly (2) provided with:
- a gas turbine (9);
- a compressor (4) comprising a plurality of adjustable inlet guide vanes, at least a first hydraulic actuating device (44) for adjusting the plurality of adjustable inlet guide vanes, a plurality of compressor discharge valves (51) and a plurality of second hydraulic actuating devices (55) for operating respective compressor discharge valves (51);
- a combustion chamber (5);
- a circuit (6) for supplying fuel to the combustion chamber (5) comprising a plurality of valves (22, 29, 36) and a plurality of third hydraulic actuating devices (23, 30, 37) for operating respective valves (22, 29, 36);
- a hydraulic circuit (3) for supplying an actuating fluid to the first hydraulic actuating device (44), to the second hydraulic actuating devices (55) and to the third hydraulic actuating devices (23, 30, 37); wherein the hydraulic circuit (3) comprises a tank (72) for collecting the actuating fluid and at least a pump (89, 99) for supplying the actuating fluid to the first hydraulic actuating device (44), to the second hydraulic actuating devices (55) and to the third hydraulic actuating devices (23, 30, 37);
- wherein the tank (72) comprises a delivery portion (85) connected to the delivery circuit (74, 75) and a return portion (86) connected to the return circuit (77); the hydraulic circuit (3) comprising a cooling circuit (78) suitable for cooling and transferring the actuating fluid from the return portion (86) to the delivery portion (85).

2. Electric power plant according to Claim 1, wherein the actuating fluid is a liquid having a flashpoint higher than about 300°C.

3. Electric power plant according to Claim 1 or 2, wherein the actuating fluid is a non-aqueous base liquid.

4. Electric power plant according to Claim 1, wherein the hydraulic circuit (3) comprises at least a delivery circuit (74, 75), which connects the tank (72) to the first hydraulic actuating device (44), the second hydraulic actuating devices (55) and the third hydraulic actuating devices (23, 30, 37), and at least a return circuit (77), which connects the first hydraulic actuating device (44), the second hydraulic actuating devices (55) and the third hydraulic actuating devices (23, 30, 37) to the tank (72).

5. Electric power plant according to anyone of the foregoing Claims, wherein the hydraulic circuit (3) comprises at least a hydraulic accumulator (96, 106).

6. Electric power plant according to anyone of the foregoing Claims, wherein the hydraulic circuit (3) comprises filtering means (91, 101) for eliminating impurities from the actuating fluid.

7. Electric power plant according to anyone of the foregoing Claims, wherein the hydraulic circuit (3) comprises a plurality of driving devices (59), each of which is suitable for driving a respective second hydraulic actuating device (55); each driving device (59) comprising a first solenoid valve (113) and a second solenoid valve (114), suitable for driving the second hydraulic actuating device (55); the first solenoid valve (113) and the second solenoid valve (114) being configured in such a way that, when the first solenoid valve (113) is off, the second solenoid valve (114) is suitable for driving the second hydraulic device (55) and vice versa.

## Patentansprüche

1. Elektrizitätserzeugungsanlage (1), die umfasst:
- eine Turbogasanordnung (2), die versehen ist mit:
- einer Gasturbine (9);
- einem Kompressor (4), der mehrere einstellbare
Einlassführungsklappen, wenigstens eine erste hydraulische Betätigungsvorrichtung (44) zum Einstellen der mehreren einstellbaren Einlassführungsklappen, mehrere Kompressorentleerungsventile (51) und mehrere zweite hydraulische Betätigungsvorrichtungen (55) zum Betätigen der jeweiligen Kompressorentleerungsventile (51) enthält;
- einer Verbrennungskammer (5);
- einem Kreis (6), um der Verbrennungskammer (5) Brennstoff zuzuführen, der mehrere Ventile (22, 29, 36) und mehrere dritte hydraulische Betätigungsvorrichtungen (23, 30, 37) zum Betätigen der jeweiligen Ventile (22, 29, 36) enthält;
- einem Hydraulikkreis (3), um der ersten hydraulischen Betätigungsvorrichtung (44), den zweiten hydraulischen Betätigungsvorrichtungen (55) und den dritten hydraulischen Betätigungsvorrichtungen (23, 30, 37) ein Betätigungsfluid zuzuführen; wobei der Hydraulikkreis (3) einen Tank (72) zum Sammeln des Betätigungsfluids und wenigstens eine Pumpe (89, 99) zum Zuführen des Betätigungsfluids zu der ersten hydraulischen Betätigungsvorrichtung (44), den zweiten hydraulischen Betätigungsvorrichtungen (55) und den dritten hydraulischen Betätigungsvorrichtungen (23, 30, 37) enthält;
wobei der Tank (72) einen mit dem Ausgabekreis (74, 75) verbundenen Ausgabeabschnitt (85) und einen mit dem Rückleitungskreis (77) verbundenen Rückleitungsabschnitt (86) enthält; wobei der Hydraulikkreis (3) einen Kühlkreis (78) enthält, der das Betätigungsfluid kühlen und von dem Rückleitungsabschnitt (86) zu dem Ausgabeabschnitt (85) transportieren kann.

2. Elektrizitätserzeugungsanlage nach Anspruch 1, wobei das Betätigungsfluid eine Flüssigkeit mit einem Flammpunkt höher als etwa 300 °C ist.

3. Elektrizitätserzeugungsanlage nach Anspruch 1 oder 2, wobei das Betätigungsfluid eine nicht wässrige Basisflüssigkeit ist.

4. Elektrizitätserzeugungsanlage nach Anspruch 1, wobei der Hydraulikkreis (3) wenigstens einen Ausgabekreis (74, 75), der den Tank (72) mit der ersten hydraulischen Betätigungsvorrichtung (44), den zweiten hydraulischen Betätigungsvorrichtungen (55) und den dritten hydraulischen Betätigungsvorrichtungen (23, 30, 37) verbindet, und wenigstens einen Rückkehrkreis (77), der die erste hydraulische Betätigungsvorrichtung (44), die zweiten hydraulischen Betätigungsvorrichtungen (55) und die dritten hydraulischen Betätigungsvorrichtungen (23, 30, 37) mit dem Tank (72) verbindet, enthält.

5. Elektrizitätserzeugungsanlage nach einem der vorhergehenden Ansprüche, wobei der Hydraulikkreis (3) wenigstens einen hydraulischen Akkumulator (96, 106) enthält.

6. Elektrizitätserzeugungsanlage nach einem der vorhergehenden Ansprüche, wobei der Hydraulikkreis (3) Filterungsmittel (91, 101) enthält, um Verunreinigungen aus dem Betätigungsfluid zu beseitigen.

7. Elektrizitätserzeugungsanlage nach einem der vorhergehenden Ansprüche, wobei der Hydraulikkreis (3) mehrere Antriebsvorrichtungen (59) enthält, wovon jede eine entsprechende zweite hydraulische Betätigungsvorrichtung (55) antreiben kann; wobei jede Antriebsvorrichtung (59) ein erstes Solenoidventil (113) und ein zweites Solenoidventil (114) enthält, die die zweite hydraulische Betätigungsvorrichtung (55) antreiben können; wobei das erste Solenoidventil (113) und das zweite Solenoidventil (114) in der Weise konfiguriert sind, dass dann, wenn das erste Solenoidventil (113) ausgeschaltet ist, das zweite Solenoidventil (114) die zweite hydraulische Vorrichtung (55) antreiben kann und umgekehrt.

## Revendications

1. Centrale électrique (1) comprenant
- un ensemble turbogaz (2) pourvu :
- d'une turbine à gaz (9) ;
- d'un compresseur (4) comprenant une pluralité d'aubes guides d'entrée réglables, au moins un premier dispositif d'actionnement hydraulique (44) pour régler la pluralité d'aubes guides d'entrée réglables, une pluralité de soupapes de décharge (51) du compresseur et une pluralité de deuxièmes dispositifs d'actionnement hydrauliques (55) pour faire fonctionner les soupapes de décharge (51) du compresseur respectives ;
- une chambre de combustion (5) ;
- un circuit (6) destiné à alimenter du carburant à la chambre de combustion (5) comprenant une pluralité de soupapes (22, 29, 36) et une pluralité de troisièmes dispositifs d'actionnement hydrauliques (23, 30, 37) pour faire fonctionner des soupapes (22, 29, 36) respectives ;
- un circuit hydraulique (3) pour alimenter un liquide d'actionnement au premier dispositif d'actionnement hydraulique (44), aux deuxièmes dispositifs d'actionnement hydrauliques (55) et aux troisièmes dispositifs d'actionnement hydrauliques (23, 30, 37) ;
où le circuit hydraulique (3) comprend un réservoir (72) pour collecter le liquide d'actionnement et au moins une pompe (89, 99) pour alimenter le liquide d'actionnement au premier dispositif d'actionnement hydraulique (44), aux deuxièmes dispositifs d'actionnement hydrauliques (55) et aux troisièmes dispositifs d'actionnement hydrauliques (23, 30, 37) ;
où le réservoir (72) comprend une partie de distribution (85) raccordée au circuit de distribution (74, 75) et une partie de retour (86) raccordée au circuit de retour (77) ; le circuit hydraulique (3) comprenant un circuit de refroidissement (78) adapté pour refroidir et transférer le liquide d'actionnement de la partie de retour (86) jusqu'à la partie de distribution (85).

2. Centrale électrique selon la revendication 1, où le liquide d'actionnement est un liquide ayant un point d'éclair supérieur à environ 300°C.

3. Centrale électrique selon les revendications 1 ou 2, où le liquide d'actionnement est un liquide basique non-aqueux.

4. Centrale électrique selon la revendication 1, où le circuit hydraulique (3) comprend au moins un circuit de distribution (74, 75), qui relie le réservoir (72) au premier dispositif d'actionnement hydraulique (44), aux deuxièmes dispositifs d'actionnement hydrauliques (55) et aux troisièmes dispositifs d'actionnement hydrauliques (23, 30, 37), et au moins un circuit de retour (77), qui relie le premier dispositif d'actionnement hydraulique (44), les deuxièmes dispositifs d'actionnement hydrauliques (55) et les troisièmes dispositifs d'actionnement hydrauliques (23, 30, 37) au réservoir (72).

5. Centrale électrique selon l'une quelconque des revendications précédentes, où le circuit hydraulique (3) comprend au moins un accumulateur hydraulique (96, 106).

6. Centrale électrique selon l'une quelconque des revendications précédentes, où le circuit hydraulique (3) comprend des moyens de filtration (91, 101) pour éliminer des impuretés du liquide d'actionnement.

7. Centrale électrique selon l'une quelconque des revendications précédentes, où le circuit hydraulique (3) comporte une pluralité de dispositifs d'entraînement (59), chacun desquels est adapté pour entraîner un deuxième dispositif d'actionnement hydraulique (55) respectif, chaque dispositif d'entraînement (59) comprenant une première électrovanne (113) et une deuxième électrovanne (114), adaptées pour entraîner le deuxième dispositif d'actionnement hydraulique (55), la première électrovanne (113) et la deuxième électrovanne (114) étant configurées pour que la deuxième électrovanne (114) puisse entraîner le deuxième dispositif hydraulique (55) lorsque la première électrovanne (113) est fermée et vice versa.
